# EUROPÄISCHE PATENTSCHRIFT

(11) **EP 1 855 929 B1**
(45) Veröffentlichungstag und Bekanntmachung des Hinweises auf die Patenterteilung: **11.06.2008**
(21) Anmeldenummer: 06706984.9
(22) Anmeldetag: 16.02.2006
(51) Int. Cl.: B60W 20/00

(54) **ANTRIEBSSTRANG EINES KRAFTFAHRZEUGS UND VERFAHREN ZUM BETREIBEN DES ANTRIEBSSTRANGES**
DRIVETRAIN OF A MOTOR VEHICLE AND METHOD FOR OPERATION OF THE DRIVETRAIN
CHAINE CINEMATIQUE D'UN VEHICULE ET PROCEDE D'UTILISATION DE LA CHAINE CINEMATIQUE

(30) Priorität: 22.02.2005 DE 102005007966
(43) Veröffentlichungstag der Anmeldung: 21.11.2007
(60) Teilanmeldung: 08154058.5
(73) Patentinhaber: ZF FRIEDRICHSHAFEN AG, 88038 Friedrichshafen (DE)
(72) Erfinder: STEINBORN, Mario, 88046 Friedrichshafen (DE); REITH, Ulrich, 88281 Schlier (DE)
(86) Internationale Anmeldenummer: PCT/EP2006/001382
(87) Internationale Veröffentlichungsnummer: WO 2006/089669

(56) Entgegenhaltungen:
- EP-A- 1 013 494
- EP-A- 1 097 831
- EP-A- 1 136 298
- EP-A- 1 450 037
- EP-B- 0 847 487
- EP-B- 0 952 932
- DE-A- 2 943 554
- DE-A- 4 436 383
- DE-A- 10 012 221
- DE-A- 10 304 632
- DE-A- 10 324 328
- DE-A- 10 335 259
- DE-A- 19 530 233
- GB-A- 2 346 123
- US-A- 5 979 257

## Beschreibung

Die vorliegende Erfindung betrifft ein Verfahren zum Betreiben eines Antriebsstranges.

Nach dem Stand der Technik ist in Fahrzeugen aller Art, welche einen Verbrennungsmotor aufweisen, der Antriebsstrang in Kraftflussrichtung in der Reihenfolge Motor - Kupplung - Schaltgetriebe - Achsgetriebe aufgebaut. Des weiteren sind am Verbrennungsmotor mindestens ein Starter und ein Generator oder eine Kombination aus beiden vorgesehen.

Es sind auch Antriebsstränge bekannt, welche einen Elektromotor umfassen, wobei Elektromotoren als Antriebsmotoren ein emissionsarmes und fast geräuschloses Fahren ermöglichen, jedoch in nachteiliger Weise begrenzte Fahrleistungen aufweisen. Aus diesem Grunde sind sogenannte Hybridantriebe entwickelt worden, bei denen das Hauptantriebsaggregat ein Verbrennungsmotor ist und als Nebenaggregat ein Elektromotor dient, der seriell oder parallel zum Antriebsstrang zwischen dem Verbrennungsmotor und dem Getriebe angeordnet ist.

Aus der DE 199 17 665 ist ein Hybridantrieb für ein Kraftfahrzeug bekannt, welcher im Antriebsstrang zwischen dem Verbrennungsmotor und dem Getriebe eine erste elektrische Maschine und eine mit der Getriebeeingangswelle permanent verbundene zweite elektrische Maschine aufweist. Hierbei ist zwischen den beiden elektrischen Maschinen, die jeweils als Motor und als Generator betreibbar sind, und dem Verbrennungsmotor jeweils eine schaltbare Kupplung angeordnet. Diese Konstruktion weist einerseits den Vorteil auf, dass elektrische Bauteile wie Starter, Generator oder Pumpenantrieb entfallen können, da eine der elektrischen Maschinen als Starter, Generator oder Pumpenantrieb betreibbar ist. Andererseits werden in nachteiliger Weise zwei elektrische Maschinen benötigt, was die Herstellungskosten negativ beeinflusst.

Der vorliegenden Erfindung liegt die Aufgabe zugrunde, die Funktionalitäten des Antriebsstranges zu erweitern.

Diese Aufgabe wird für eine Anordnung von Komponenten des Antriebsstranges durch die Merkmale des Patentanspruchs 1 gelöst.

Betrieben wird ein Antriebsstrang eines Kraftfahrzeugs, umfassend einen Elektromotor, welcher in Kraftflussrichtung in der Reihenfolge Verbrennungsmotor - Kupplung - Elektromotor - Schaltgetriebe - Achsgetriebe oder Verbrennungsmotor - Kupplung - Elektromotor - Eingangswelle des Schaltgetriebes - Schaltgetriebe - Achsgetriebe aufgebaut ist, wie aus der EP 1 097 831 bekannt.

Durch die Anordnung kann der Starter (Anlasser) entfallen, wobei in diesem Fall zum Anlassen des Verbrennungsmotors das Schaltgetriebe nach Neutral geschaltet, die Kupplung geschlossen und der Verbrennungsmotor mittels des Elektromotors gestartet wird.

Es kann der Generator durch den Elektromotor ersetzt werden, da bei beschlossener Kupplung der Elektromotor als Generator einsetzbar ist. Hierbei kann die dadurch gewonnene Energie durch Zwischenspeicherung bei Zuständen mit hohem Leistungsbedarf wieder-verwendet werden. Auch kann die durch den Generatorbetrieb des Elektromotors gewonnene Energie zum Antrieb von elektrisch angetriebenen Rädern verwendet werden, beispielsweise zur Realisierung eines Mehrradantriebes in schwierigen Fahrsituationen (Off-Road, Glätte etc.).

Es wird vorgeschlagen, den Elektromotor zur Synchronisierung der Schaltungen im Schaltgetriebe zu verwenden. Hierbei kann beispielsweise bei geöffneter Kupplung nach Neutral geschaltet werden, wobei der Elektromotor die Synchrondrehzahl herstellt und anschließend der Gang geschaltet wird. Dadurch lässt sich eine sehr schnelle und genaue Synchronisierung realisieren; bei einem Mehrgruppengetriebe kann der beschriebene Ablauf mehrfach wiederholt werden. Es kann durch die Verwendung des Elektromotors zur Synchronisierung der Schaltungen im Schaltgetriebe das Schaltgetriebe inklusive eventuell vorhandener Gruppen unsynchronisiert ausgeführt werden, wodurch die Schaltzeiten verkürzt und Schaltkomfort sowie Einschaltsicherheit verbessert werden.

Der Elektromotor kann auch zur Synchronisation des Getriebes bei Schaltvorgängen mit einer Zieldrehzahl des Verbrennungsmotors, die größer als die Leerlaufdrehzahl ist, verwendet werden, wobei die Synchronisation bei geschlossener Kupplung durch den Elektromotor erfolgt. Des weiteren wird vorgeschlagen, den Elektromotor zur Synchronisation des Getriebes bei Schaltvorgängen mit einer Zieldrehzahl, die kleiner als die Leerlaufdrehzahl ist, zu verwenden, wobei ein Schaltablauf ohne Unterschreiten der Leerlaufdrehzahl des Motors durch Öffnen der Kupplung ermöglicht wird und wobei die Synchronisation durch den Elektromotor erfolgt.

Eine Möglichkeit besteht darin, den Elektromotor als Anfahrhilfe und/oder Rangierhilfe zu verwenden, wobei der Anfahrvorgang bzw. der Rangiervorgang durch den Elektromotor unterstützt oder selbständig durchgeführt wird. Eine andere sieht vor, den Anfahrvorgang mittels des Elektromotors nach definierten Vorgaben zu automatisieren. Zudem kann der Elektromotor zur Verhinderung bzw. Verringerung des Anrollens am Berg; zum definierten Wegrollen und/oder zur Realisierung einer Kriechfunktion sowie zum Freischaukeln des Fahrzeugs verwendet werden. Hierbei kann der Elektromotor für definierte Fahrfunktionen eingesetzt werden, z. B. zum Fahren mit konstanter geringer Geschwindigkeit (z. B. beim Be- und Entladen während der Fahrt oder beim Durchfahren von Waschanlagen oder Serviceeinrichtungen), insbesondere dann, wenn die Sollgeschwindigkeit die kleinste fahrbare Geschwindigkeit mit geschlossenem Antriebsstrang unterschreitet.

Zudem wird vorgeschlagen, den Elektromotor zur aktiven Schwingungsdämpfung zu verwenden. Hierbei wird der Elektromotor beim Auftreten von Schwingungen derart betrieben, dass er den Schwingungen aktiv entgegenwirkt, so dass eine Dämpfung erzielt wird. Zudem kann eine Schwingungsdämpfung dadurch erzielt werden, dass die Masse des Elektromotors als Schwungmasse zur Schwingungsdämpfung dient, so dass die Schwungmasse des Verbrennungsmotors kleiner ausgeführt werden kann.

Durch den Elektromotor ist eine beschleunigte Motorregelung auf eine Zieldrehzahl möglich, wobei der Elektromotor drehzahlerhöhend oder drehzahlerniedrigend wirken kann. Auch kann der Elektromotor zur Verbesserung der Regelgüte der Motorregelung des Verbrennungsmotors eingesetzt werden; beispielsweise sind dadurch Überschwinger bei der Regelung des Verbrennungsmotors weitgehend kompensierbar.

Es wird vorgeschlagen, den Elektromotor zur Verbesserung bzw. zur Durchführung der Beschleunigung sowie der Bremsvorgänge des Fahrzeuges bzw. als Bremsomat und/oder Tempomat zu verwenden. Außerdem kann der Elektromotor zur Erhaltung von Fahrfunktionen bei Ausfall des Verbrennungsmotors, beispielsweise aufgrund von Störungen, Treibstoffmangel, Kupplungsdefekt, verwendet werden, so dass ein redundantes Antriebssystem zur Verfügung gestellt wird. Auch kann bei Fahrzuständen, bei denen die Leistung des Elektromotors ausreichend ist, der Antrieb teilweise und/oder ausschließlich mittels des Elektromotors erfolgen, wobei der Verbrerinungsmotor zur Energieeinsparung gedrosselt oder abgeschaltet wird.

Im Schaltgetriebe kann es bei Schaltungen zu Zahn auf Zahn - Stellungen kommen, so dass kein ausreichender Kraftfluss im Getriebe hergestellt werden kann. Durch eine entsprechende Ansteuerung bzw. Momentenänderung im Elektromotor kann eine Zahn auf Zahn - Stellung in vorteilhafter Weise aufgelöst werden.

Es wird zudem vorgeschlagen, den Elektromotor zur Drehmomentadaption der Kupplungskennlinie zu verwenden. Hierbei wird nach Neutral geschaltet und die Kupplung in Schlupfposition gebracht. Anschließend wird am Elektromotor ein definiertes Drehmoment eingestellt. Bei konstantem Schlupf entspricht das Drehmoment am Elektromotor dem übertragbaren Drehmoment an der Kupplung für den entsprechenden Wegpunkt der Kupplung. Im Rahmen der Erfindung wird der Elektromotor zur Plausibilisierung des Motormomentes des Verbrennungsmotors eingesetzt. Hierbei wird nach Neutral geschaltet und die Kupplung geschlossen und anschließend ein definiertes Moment am Elektromotor aufgebracht, derart, dass durch einen Vergleich mit dem vom Verbrennungsmotor gelieferten Moment eine Bewertung des gelieferten Motormoments bzw. eine Erkenntnis auf Nebenverbraucher am Verbrennungsmotor gewonnen wird. Auf diese Weise wird auch eine Motordiagnose ermöglicht. (z.B. Einspritzprobleme am Motor).

Des weiteren kann der Antriebsstrang derart betrieben werden, dass der Elektromotor zur Verhinderung des Abwürgens des Verbrennungsmotors verwendet wird, wenn ein eventuelles Abwürgen des Motors erkannt wird, z. B. wenn die Motordrehzahl unter Leerlauf absinkt, wobei in diesem Fall eine Leistungszufuhr des Elektromotors in den Antriebsstrang veranlasst wird.

Es kann eine gezielte Momentenüberlagerung von Elektromotor und Verbrennungsmotor, beispielsweise zur Realisierung von gewollten Momentensprüngen realisiert werden. Ferner wird durch eine gezielte Momentenüberschneidung von Elektromotor und Verbrennungsmotor eine Verbesserung des Lastab- und -aufbaus bei Schaltungen ermöglicht.

Eine andere Verwendung des in den Antriebsstrang integrierten Elektromotors besteht darin, dass der Elektromotor zur Dreh-/Fahrtrichtungserkennung eingesetzt wird; zudem kann der Elektromotor zur Traktionsregelung verwendet werden.

Bei geschlossenem Antriebsstrang kann ein Gang im Getriebe, wenn das Motormoment nahe Null ist, ausgeschaltet werden. Um die Ausschaltkräfte zu verringern, wird vorgeschlagen, eine Momentenüberlagerung des Elektromotors zum Verbrennungsmotor durchzuführen. Beispielsweise kann, wenn der Verbrennungsmotor durch Bergabfahrt im Zustand der Überdrehzahl ist und damit ein Bremsmoment aufbaut, welches das Ausschalten des Ganges verhindert, mit dem Elektromotor ein lastfreier Zustand im Bereich der Überdrehzahl des Verbrennungsmotors hergestellt werden.

Analog dazu kann der Elektromotor zur Verbesserung der Einschaltsicherheit bzw. zur Verringerung der Einschaltkräfte eingesetzt werden. Dies ist bei Schaltungen mit geschlossener Kupplung bei einem sehr geringen Motormoment möglich, wobei durch Momentenüberlagerung des Elektromotors zum Verbrennungsmotor dieser Zustand schneller erreicht und länger gehalten werden kann.

Es können vorausschauende Schaltungen durchgeführt werden, die in Überdrehzahl des Verbrennungsmotors enden, wie im Folgenden erläutert wird. Es wird ein für die vorhandene. Fahrsituation maximal möglicher Gang berechnet, in dem das Fahrzeug ohne Geschwindigkeitsverlust fahren kann, wobei dieser Gang auf Grund der Drehzahlverhältnisse noch nicht schaltbar ist, da zum Schalten das Fahrzeug noch entsprechend verzögern muss. Es kann der Elektromotor derart angesteuert werden, dass er diese erhöhten Drehzahlen zur Verfügung stellt. Dadurch kann während des Geschwindigkeitsverlustes vorausschauend der richtige aber aktuell noch zu hohe Gang mit Synchronisierunterstützung des Elektromotors geschaltet werden, wobei, wenn das Fahrzeug auf eine für, den Gang zulässige Motordrehzahl verzögert, die Kupplung geschlossen wird. Bis zu diesem Zeitpunkt kann der Elektromotor das Fahrzeug antreiben.

Bei Fahrzeugen mit mehreren Antriebseinheiten bzw. Antriebssträngen kann mit den jeweiligen Elektromotoren die Synchronisierung der Einheiten zueinander verbessert werden. Beispielsweise kann ein Zug gezielt gestreckt werden, wobei dies zur Verminderung von Ruckvorgängen beim Anfahren oder beim Auftreten von schwingungsanregenden Schienenbauteilen (z.B. Weichen) von besonderer Bedeutung ist. Hierbei kann, wenn eine Antriebseinheit schaltet, das fehlende Antriebsmoment der schaltenden Einheit durch die Elektromotoren der nicht schaltenden Einheiten definiert übernommen oder mindestens teilkompensiert werden.

Durch die Möglichkeiten Kupplungsfunktionen durch den Elektromotor zu übernehmen bzw. zu unterstützen, können Kupplungen und Betätigungsmechanismus mit verminderten technischen Eigenschaften eingesetzt werden, was in einer Verringerung der Herstellungskosten resultiert.

Es können Nebenabtriebe des Fahrzeugs mit dem Elektromotor ohne den Verbrennungsmotor betrieben werden, wobei auch Drehzahlen, die die größte maximale Verbrennungsmotordrehzahl überschreiten oder die kleiner als die Leerlaufdrehzahl liegen, ermöglicht werden. Des weiteren können Nebenabtriebe beim Ein- oder Ausschalten mittels des Elektromotors definiert synchronisiert werden.

## Patentansprüche

1. Verfahren zum Betreiben eines Antriebsstranges eines Kraftfahrzeugs, umfassend einen Elektromotor, einen Verbrennungsmotor, ein Schaltgetriebe, eine Kupplung und ein Achsgetriebe, wobei der Antriebsstrang in Kraftflussrichtung in der Reihenfolge Verbrennungsmotor - Kupplung - Elektromotor - Schaltgetriebe - Achsgetriebe oder Verbrennungsmotor - Kupplung - Elektromotor - Eingangswelle des Schaltgetriebes - Schaltgetriebe - Achsgetriebe aufgebaut ist, und ,mittels des Elektromotors die Schaltungen des Getriebes optimiert werden, der Verbrennungsmotor unterstützt oder ersetzt wird, und/oder definierte Fahr- und Regelungsfunktionen durchgeführt werden, **dadurch gekennzeichnet, dass** das Schaltgetriebe nach Neutral geschaltet und die Kupplung geschlossen wird und anschließend ein definiertes Moment am Elektromotor aufgebracht wird, derart, dass durch einen Vergleich mit dem vom Verbrennungsmotor gelieferten Moment eine Bewertung des gelieferten Motormoments bzw. eine Erkenntnis auf Nebenverbraucher am Verbrennungsmotor gewonnen wird, wodurch der Elektromotor zur Plausibilisierung des Motormomentes des Verbrennungsmotors eingesetzt wird.

## Claims

1. A method for powering the drive train of a motor vehicle comprising an electric motor, a combustion engine, a manual transmission, a dutch, and an axle drive, with the drive train being arranged in the direction of power flow in the sequence combustion engine - clutch - electric motor - manual transmission - axle drive or combustion engine - dutch - electric motor - input shaft of the manual transmission - manual transmission - axle drive, and with the electric motor optimizing the gearshifts of the transmission, supporting or substituting the combustion engine and/or executing defined driving and control functions, **characterized in that** the manual transmission is shifted to Neutral and the clutch is closed before a defined torque is provided by the electric motor in such a way that by comparison with the torque provided by the combustion engine it is possible to obtain an assessment of the engine torque supplied or information about accessories on the combustion engine, as a result of which the electric motor is used for plausibility checking of the engine torque of the combustion engine.

## Revendications

1. Procédé pour utiliser une chaîne cinématique d'un véhicule automobile, comprenant un moteur électrique, un moteur à combustion interne, une boîte de vitesses, un embrayage et un pont, dans lequel la chaîne cinématique est organisée dans l'ordre de succession suivant : moteur à combustion interne - embrayage - moteur électrique - boîte de vitesses - pont ou moteur à combustion interne - embrayage - moteur électrique - arbre d'entrée de la boîte de vitesses - boîte de vitesses - pont et où les passages de vitesses de la boîte de vitesses sont optimisés, le moteur à combustion interne est assisté ou remplacé et/ou certaines des fonctions de conduite et de régulation définies sont exécutées au moyen du moteur électrique, **caractérisé en ce que** l'on met la boîte de vitesses au point mort et l'on ferme l'embrayage, puis l'on amène le moteur électrique à développer un couple défini, de telle sorte que, par comparaison avec le couple délivré par le moteur à combustion interne, l'on obtient une évaluation du couple délivré ou la connaissance de consommateurs accessoires entraînés par le moteur à combustion interne, de sorte que le moteur électrique est utilisé pour permettre d'analyser le couple du moteur à combustion interne.
